# EUROPEAN PATENT SPECIFICATION

(11) **EP 3 050 308 B1**
(45) Date of publication and mention of the grant of the patent: **18.07.2018**
(21) Application number: 13894425.1
(22) Date of filing: 27.09.2013
(51) Int. Cl.: H04N 21/414, H04H 20/62, H04L 29/08, H04N 7/18, B61L 27/00, B61L 15/00

(54) **WIRELESS DATA OFFLOAD SYSTEM**
DRAHTLOSES SYSTEM FÜR DATEN-OFFLOAD
SYSTÈME DE DÉLESTAGE DE DONNÉES SANS FIL

(43) Date of publication of application: 03.08.2016
(73) Proprietor: Teleste Oyj, 20660 Littoinen (FI)
(72) Inventor: VÄRE, Jani, 20780 Kaarina (FI); JOHANSSON, Jouni, 21250 Masku (FI)
(74) Representative: Berggren Oy, Tampere
(86) International application number: PCT/FI2013/050945
(87) International publication number: WO 2015/044502

(56) References cited:
- WO-A1-00/52851
- WO-A1-2013/042330
- US-A1- 2004 008 253
- US-A1- 2006 274 829
- US-A1- 2008 298 384
- US-A1- 2009 189 981
- US-A1- 2010 234 071
- US-A1- 2012 144 421

## Description

### Field of the invention

The invention relates to using complementary network technologies for delivering data, specifically to wireless data offload systems.

### Background of the invention

The recent explosion in the use of video, social media and Internet gaming across a range of new devices, such as smartphones and tablets, has created a huge growth in network data traffic. While the next-generation network deployments aim to offer wider bandwidth and higher data speed, the amount of network users and data traffic is estimated to grow even faster, thus causing at least occasional local network congestions.

Data offload generally refers to a transfer process of data that is stored on a physical media, such as a Network video recorder. The offload can be carried out wirelessly or with wired connection. The use of complementary or dedicated technology for the data offload purposes is advantageous, especially in a situation where the data network resource allocated for the data delivery the data is about to reach its maximum capacity. Dedicated data offload solution may be especially useful when the wireless networks are in general used as shared resource and where the available bandwidth and data speed typically depends on the amount of users connected to a base station of the wireless network. In highly-populated areas, cellular networks are designed to provide higher cell density and wider bandwidth. In addition, wireless local area networks such as Wi-Fi networks are typically available for transferring at least a part of the data traffic. In rural areas, the base stations are more sparsely located and offering lower data speed, whereby a sudden surge in data traffic may temporarily congest the network.

A specific challenge in wireless data traffic is the data delivery to and from mobile vehicles, especially public transportation vehicles, like trains, trams, metro trains and busses. A moving vehicle, as such, poses challenges to reliable data transfer, where the usable data rate typically reduces as a function of the speed of the vehicle. Many public transportation operators have started to offer a wireless data connection, such as a Wi-Fi connection, for the passengers to use during their trip. Moreover, the requirements for using video surveillance in public transportation vehicles are continuously increasing. The video data from a plurality of surveillance cameras, together with the data traffic of the passengers, easily amounts to an extensive quantity of data, which cannot be transferred within the capacity of current wireless networks without a significant delay. The U.S. patent application US 2008/0298384 A1 shows such a network on-board rail vehicles including camera surveillance data transmission.

### Brief summary of the invention

Now, an improved arrangement has been developed to reduce the above-mentioned problems. As different aspects of the invention, we present a system, a method, a mobile communication unit and a wayside communication unit, which are characterized in what will be presented in the independent claims.

The dependent claims disclose advantageous embodiments of the invention.

The first aspect of the invention comprises a system for transferring data between a mobile communication unit and a wayside communication unit; the mobile communication unit being arranged to obtain data from one or more data sources arranged in functional connection with the mobile communication unit, the mobile communication unit comprising at least one encoder arranged to encode said data into a stream format compatible with a broadcast standard and a transmitter arranged to transmit the encoded data stream in accordance with said broadcast standard to the wayside communication unit; and the wayside communication unit comprising a receiver arranged to receive the encoded data stream in accordance with said broadcast standard, the wayside communication unit being arranged to forward the encoded data stream to a data target for decoding.

According to an embodiment, the mobile communication unit is arranged in a mobile vehicle and said one or more data sources comprise one or more surveillance cameras arranged to provide video data about said mobile vehicle and/or one or more data terminals operated by passengers of the mobile vehicle.

According to an embodiment, the mobile vehicle is a public transportation vehicle, such as a train, a tram, a metro train or a bus, arranged to travel a predetermined route, and the system comprises a plurality of wayside communication units arranged along said route.

According to an embodiment, the wayside communication unit is arranged to forward the video data from said one or more surveillance cameras to a video surveillance system and user data from said one or more data terminals operated by the passengers to a data communication network.

According to an embodiment, the mobile communication unit further comprises a video recorder arranged to buffer at least a part of the video data from said one or more surveillance cameras before transmission to the wayside communication unit.

According to an embodiment, the mobile communication unit is arranged to start the transmission to the wayside communication unit in response to a control signal obtained via the mobile communication unit.

According to an embodiment, the wayside communication unit is arranged to monitor whether a transmission signal from the mobile communication unit is available; and if affirmative, the wayside communication unit is arranged to start the reception by synchronising into the transmission signal.

According to an embodiment, in response to detecting that the transmission signal from the mobile communication unit is available, the wayside communication unit is arranged to send an offload request to the mobile communication unit; and in response to receiving an acknowledgement from the mobile communication unit, the wayside communication unit is arranged to start the reception by synchronising into the transmission signal.

According to an embodiment, the mobile communication unit is arranged to encode said data into MPEG transport stream (TS) arranged to be transmitted in accordance with DVB-T or ATSC broadcast standard.

A second aspect of the invention includes a method for transferring data between a mobile communication unit and a wayside communication unit, the method comprising: obtaining data from one or more data sources arranged in functional connection with the mobile communication unit; encoding said data into a stream format compatible with a broadcast standard; and transmitting the encoded data stream in accordance with said broadcast standard to the wayside communication unit for further forwarding the encoded data stream to a data target for decoding.

A third aspect of the invention relates to a mobile communication unit arranged to obtain data from one or more data sources arranged in functional connection with the mobile communication unit, the mobile communication unit comprising at least one encoder arranged to encode said data into a stream format compatible with a broadcast standard; and a transmitter arranged to transmit the encoded data stream in accordance with said broadcast standard to the wayside communication unit for further forwarding the encoded data stream to a data target for decoding.

A fourth aspect of the invention relates to a wayside communication unit comprising a receiver arranged to receive an encoded data stream in accordance with a broadcast standard from a mobile communication unit, the data being obtained from one or more data sources arranged in functional connection with the mobile communication unit; and the wayside communication unit being arranged to forward the encoded data stream to a data target for decoding.

### Brief description of the drawings

The invention will now be described in more detail in connection with preferred embodiments with reference to the appended drawings, in which:
- Fig. 1: shows a simplified example of the operating principle of the data offload system;
- Fig. 2: shows a possible implementation of the mobile communication unit according to an embodiment in a reduced block chart;
- Fig. 3: shows a possible implementation of the mobile communication unit according to another embodiment in a reduced block chart;
- Fig. 4: shows an example of the broadcast system arranged to provide the transport streams of the video/audio feed from the surveillance cameras to a surveillance centre of the video surveillance system;
- Fig. 5: shows how the camera feed from the surveillance cameras may be multiplexed into a Transport Stream according to an embodiment;
- Figs. 6a, 6b: show alternatives for arranging the Elementary streams into programs according to MPEG TS structure;
- Fig. 7: shows a flow chart of a procedure for initiating the transmission from the mobile communication unit according to such an embodiment;
- Fig. 8: shows a flow chart of a procedure for initiating the transmission from the mobile communication unit according to an embodiment;
- Fig. 9: shows a flow chart of a procedure for initiating the transmission from the mobile communication unit according to another embodiment; and
- Fig. 10: shows a flow chart of a procedure for discovering a camera-specific feed from the broadcast transmission according to an embodiment.

### Detailed description of the invention

Using video surveillance in public transportation vehicles creates an enormous amount of video data to be transferred from the vehicle. In order to simplify the description of various embodiments of the invented data offload system, most of the following embodiments are described from the viewpoint of transferring video data of one or more CCTV (Closed-Circuit Television) surveillance cameras from the vehicle. Nevertheless, the embodiments are equally applicable for transferring any other data, such as user data of the passengers, to/from the vehicle, as will be evident from the embodiments described below.

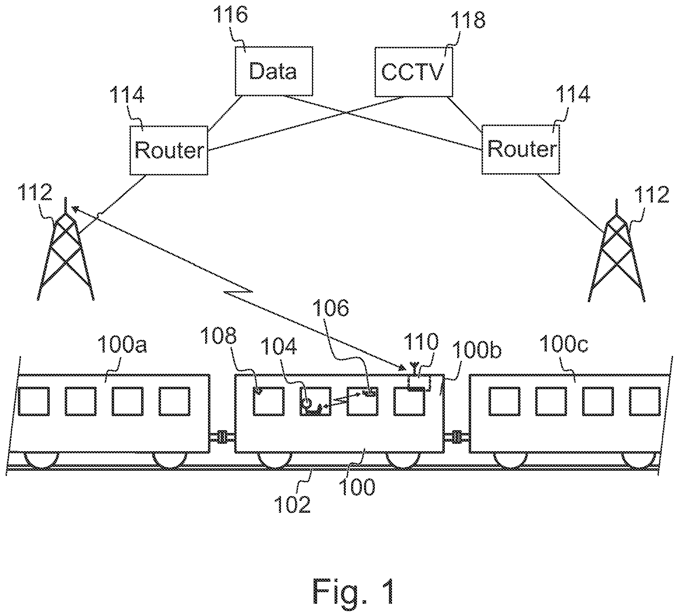

Figure 1 shows a simplified example of the operating principle of the data offload system. Figure 1 illustrates a rail traffic vehicle 100, such as a train, a tram or a metro train, travelling on the rails 102. The rail traffic vehicle 100 may comprise one or more cars 100a, 100b, 100c, etc., typically arranged to transport passengers. A wireless data connection, such as a Wi-Fi connection, may be offered for the passengers to be used during their trip. In Figure 1, a passenger 104 uses his/her mobile device via a wireless connection provided by a wireless base station 106. Moreover, each car may include one or more surveillance cameras 108 capturing video surveillance data within the car. During the trip, especially the video surveillance data may amount to an extensive quantity of data.

The vehicle 100 comprises at least one mobile communication unit 110, which is arranged to communicate with at least one wayside communication unit 112 arranged along a route of the vehicle 100. The mobile communication unit 110 is arranged to obtain data from one or more data sources, such as one or more surveillance cameras and/or one or more data terminals operated by passengers, arranged in functional connection with the mobile communication unit. The mobile communication unit 110 comprises at least one encoder arranged to encode said data into a stream format compatible with a broadcast standard and a transmitter arranged to transmit the encoded data stream in accordance with said broadcast standard to the wayside communication unit 112.

The wayside communication unit 112 comprises a receiver arranged to receive the encoded data stream in accordance with said broadcast standard. The wayside communication unit 112 is further arranged to forward the encoded data stream to a data target for decoding. The data targets may comprise, for example, a data communication network 116 and a video surveillance system 118, and the wayside communication unit 114 may be arranged to forward the video data from said one or more surveillance cameras to the video surveillance system 118 and user data from said one or more data terminals operated by the passengers to the data communication network 116. The system may comprise one or more routers 114 arranged to route the data to an appropriate data target.

The mobile communication unit 110 may further comprise a video recorder arranged to buffer at least a part of the video data from said one or more surveillance cameras and/or a data storage arranged to buffer at least a part of the user data from said one or more data terminals operated by the passengers before transmission to the wayside communication unit.

A public transportation vehicle, such as a train, a tram, a metro train or a bus, is typically arranged to travel a predetermined route, whereby the system may comprise a plurality of wayside communication units arranged along said route. The wayside communication units may be positioned, for example, at the stations where the vehicle is configured to stop, whereby the buffered video and/or user data may be transferred to the wayside communication unit during the stoppage. On the other hand, the plurality of wayside communication units may be distributed along the route such that the video data from said one or more surveillance cameras and/or the user data from said one or more data terminals operated by the passengers may be transferred to a wayside communication unit substantially continuously during the trip.

The distance between two consecutive wayside communication units may vary significantly, depending on, for example, the expected amount of data to be transferred and the geological surroundings along the route. For example, the data transfer from a metro train travelling in a tunnel and providing a great amount of surveillance data may require that the wayside communication units are placed at a distance of a couple of hundred meters apart each other. On the other hand, for a bus travelling in favourable geological surroundings and providing possibly only user data from passengers' data terminals, it may suffice that the wayside communication units are placed at a distance of a few tens of kilometres apart each other.

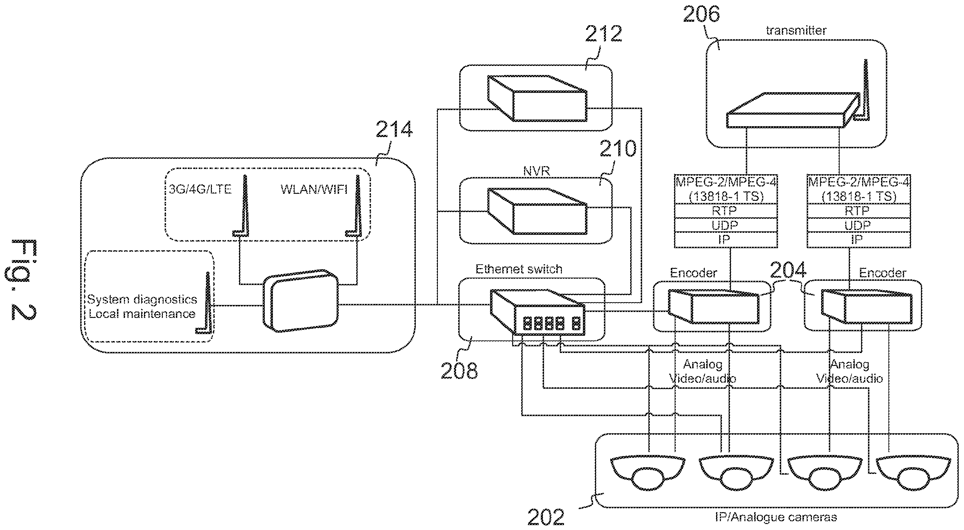

Figure 2 shows a possible implementation of the mobile communication unit according to an embodiment in a reduced block chart. The mobile communication unit 200 is arranged to obtain data from one or more data sources 202, such as a plurality of surveillance cameras and/or one or more WLAN base stations. The surveillance cameras may be traditional analog cameras or IP cameras capable of arranging the video data in an IP-based format for transmission. The mobile communication unit comprises at least one, preferably several encoders 204 arranged to encode said data into a stream format compatible with a broadcast standard and a transmitter 206 arranged to transmit the encoded data stream in accordance with said broadcast standard to the wayside communication unit.

According to an embodiment, the mobile communication unit is arranged to encode said data into MPEG transport stream (TS) arranged to be transmitted in accordance with Digital Video Broadcasting (DVB) or Advanced Television Systems Committee (ATSC) broadcast standard. DVB transmissions are based on MPEG-2 Transport Stream (MPEG-2 TS), which can multiplex numerous data streams of different types. The MPEG-2 TS standard defines data types e.g. for video, audio, teletext and, in addition, a user defined data type, i.e. private data. MPEG-2 TS is arranged to be transmitted in time-multiplexed fixed sized packets. Thus, the encoders 204 preferably support at least MPEG-2 encoding, but possibly also MPEG-4 and MJPEG encoding.

The transmitter 206 preferably enables multiplexing of SPTS (Single Program Transport Stream) and MPTS (Multi Program Transport Stream) video services as well as PSI/SI (Program Specific Information/Service Information) table streams according to MPEG TS. If DVB-T (Terrestrial) broadcast standard is used, the transmitter is preferably arranged to use Coded Orthogonal Frequency-Division Multiplexing (COFDM) for encoding the data streams on multiple carrier frequencies.

Thus, the mobile communication unit of Figure 2 may be used for continuous (non-stop) offloading of live video/audio feed from the surveillance cameras. However, the mobile communication unit may further comprise an Ethernet switch 208, a Network Video Recorder (NVR) 210 and a data storage component 212. The video data from the surveillance cameras may be routed, by the Ethernet switch, to be stored as such in the NVR, and at an appropriate moment, at least part of the content of the NVR is offloaded via the Ethernet switch to the encoders 204 for encoding into the stream format and further broadcast by the transmitter 206. Similarly, the user data from passengers' data terminals may be temporarily stored in the data storage component, and at least partly offloaded at a later stage.

The mobile communication unit 200 may preferably comprise a control unit 214 providing a configuration interface for storing system configuration data, carrying out system maintenance, obtaining system diagnostics and controlling the data offload process. The control unit may be accessed by a local user interface in the vehicle using e.g. a wired or wireless connection, or remotely using a wireless connection, such as 3G/4G/LTE mobile data connection or WLAN/Wi-Fi connection. Thus, the operations of the mobile communication unit may be controlled locally, e.g. by the personnel of the vehicle, or remotely, e.g. by an operator situated at a station.

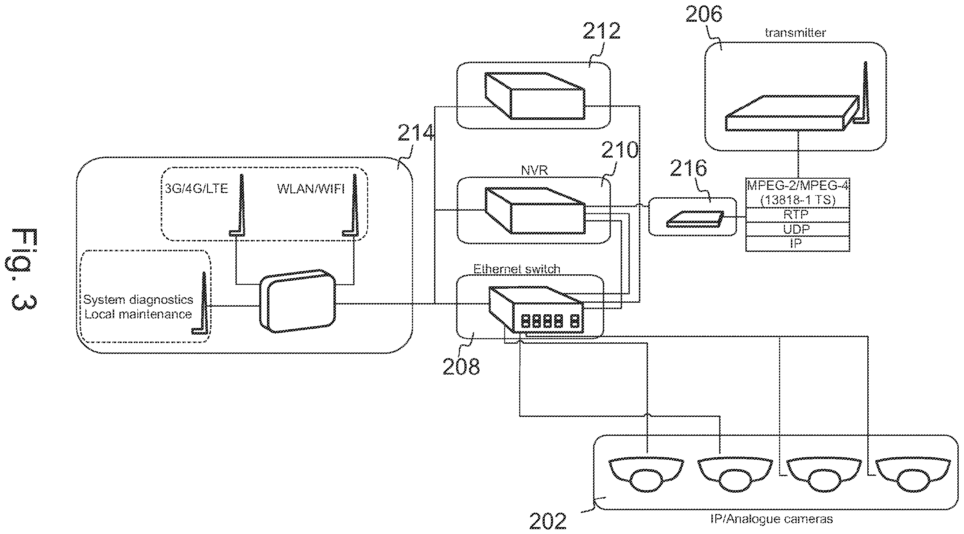

Figure 3 shows an implementation of the mobile communication unit according to another embodiment in a reduced block chart. Whereas the implementation shown in Figure 2 enables both non-stop broadcasting of data and delayed offloading from the NVR or any data other storage, the mobile communication unit of Figure 3 is designed for offloading from the NVR or any data other storage only. The design of Figure 3 may be advantageous, for example, for offloading video/audio feed from the surveillance cameras in a system, where the offloading is carried out when the vehicle stops at stations or at bus/tram stops.

Compared to the implementation shown in Figure 2, the design of Figure 3 lacks the encoders arranged to continuously encode the user data and/or live video/audio feed into the stream format, such as the MPEG TS format. Instead, video data from the surveillance cameras and the user data from passengers' data terminals is be routed via the Ethernet switch to be stored as such in the NVR or the storage component. The mobile communication unit according to Figure 3 comprises an encoder 216, for example an IP-to-TS encoder, which encodes the user data and/or live video/audio feed into the desired stream format, such as the MPEG TS format, when the offload process is initiated. Otherwise the operation of the mobile communication units shown in Figures 2 and 3 is substantially similar to each other.

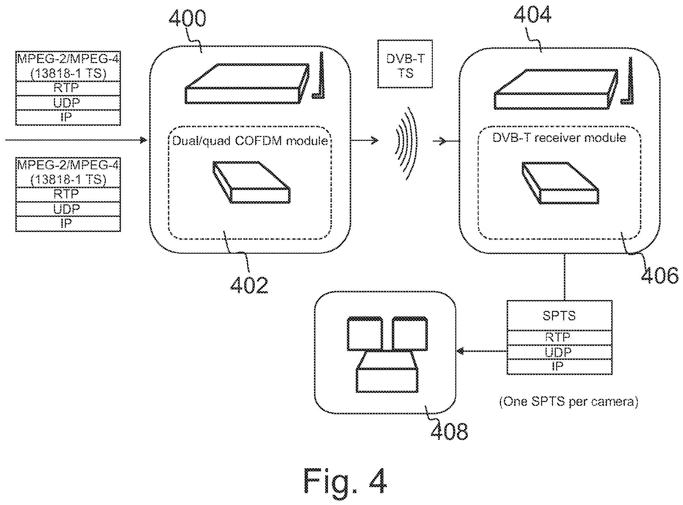

Figure 4 shows an example of the broadcast system arranged to provide the transport streams of the video/audio feed from the surveillance cameras to a surveillance centre of the video surveillance system. The encoded transport streams are obtained by the transmitter 400 (corresponds to the transmitter 206 of Figures 2 and 3). The transmitter may contain a DVB multiplexer 402, e.g. a COFDM module, which is arranged to re-multiplex the encoded transport stream into a DVB transport stream. The DVB TS is transmitted to a receiver 404 of the wayside communication unit. The receiver may contain a DVB demultiplexer 406, e.g. a DVB-T receiver module, which is arranged to demultiplex the DVB transport stream into encoded transport streams. According to an embodiment, the demultiplexing is carried out such that the encoded transport streams are arranged as one SPTS (Single Program Transport Stream) per camera feed. This facilitates the separation and identification of various camera feed at the surveillance centre 408, as will be explained further below.

Typically a video surveillance system comprises one or more surveillance centres, usually provided with a plurality of displays or a video wall with a possibility to display several screens on a large wall display or on one monitor. The SPTSs are decoded and shown on a display or a video wall of the surveillance centre 408.

The configuration of the video surveillance system is administrated by a system administrator having a configuration interface for storing system configuration data, such as setup data for each system element and system module in a database. It may also allow the system administrator to configure the details of user profiles, setup rights and priorities to system resources.

The system control may also be accessible from a plurality of remote surveillance points 110 comprising a client application, the surveillance points being connected to a node point of the video surveillance network. It is possible to provide access to the system control also from an external node, for example via a Web-based client application providing the operator an interface to control system devices, components and resources from a standard web browser.

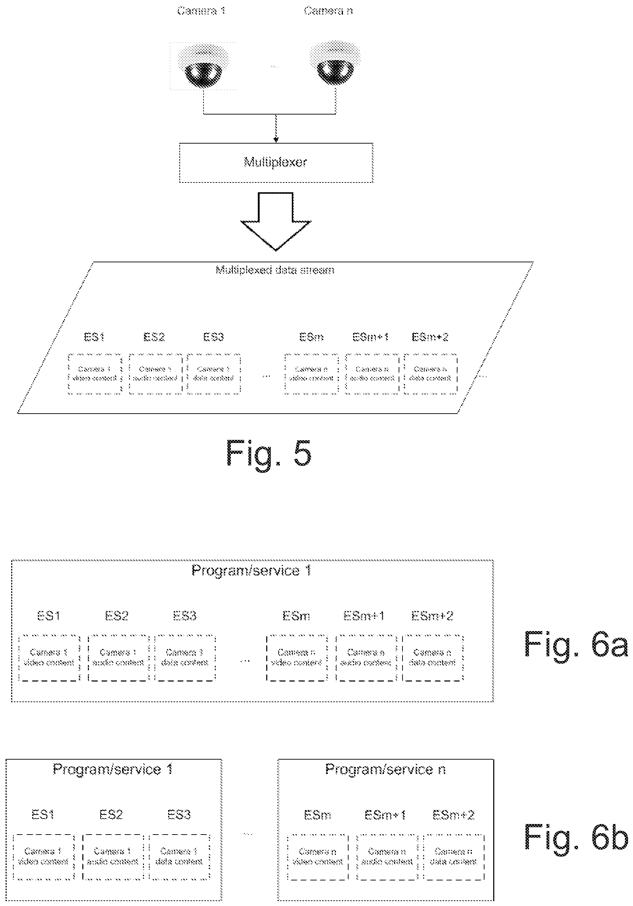

Figure 5 shows more in detail how the camera feed from the surveillance cameras may be multiplexed into a Transport Stream according to an embodiment. The content of the camera feed may comprise video, audio and metadata components relating to a captured surveillance event. The metadata may contain e.g. an identifier of the camera, an identifier of the car where the camera is located, etc. The metadata may be included, for example, in the PSI/SI tables of the Transport Stream. According to an embodiment, the video, audio and metadata components from each camera (camera 1 - camera n) are multiplexed into separate Elementary Streams (ES). Thus, the multiplexed Transport Stream comprises three Elementary Streams for each camera feed: a first ES for video content, a second ES for audio content and a third ES for data content. The total number of Elementary Streams (ESm+2) in the Transport Stream is obtained by multiplying the number of surveillance cameras by three (n x 3).

Figures 6a and 6b show two alternatives for arranging the Elementary streams into programs according to MPEG TS structure. In Figure 6a, all Elementary Streams from all cameras are associated with one program of the Transport Stream, e.g. by associating a common packet ID (PID) for all the ESs. This results in a Single Program Transport Stream (SPTS) for the Elementary Streams of all cameras. In Figure 6b, all three Elementary Streams from each camera are associated with one program of the Transport Stream, again by associating a common PID for all three ESs. A different PID is then associated with the three ESs of the next camera. This results in a Multi Program Transport Stream (MPTS) for the Elementary Streams of all cameras, where camera-specific identification may be carried out, for example, on the basis of a camera-specific SI.

The transmission from the mobile communication unit to the wayside unit(s) may be continuous or periodic or it may be started as a response to a predetermined command given either in the mobile communication unit or in the wayside unit. Prior to starting the transmission, the mobile communication unit may be arranged to transmit an offload signal to the wayside units as an indication that the mobile communication unit is ready to start the transmission of the user data and/or video/audio feed from the cameras. The offload signal may preferably be DVB-T or ATSC signal transmitted on a predetermined frequency range, which the wayside units are arranged to listen.

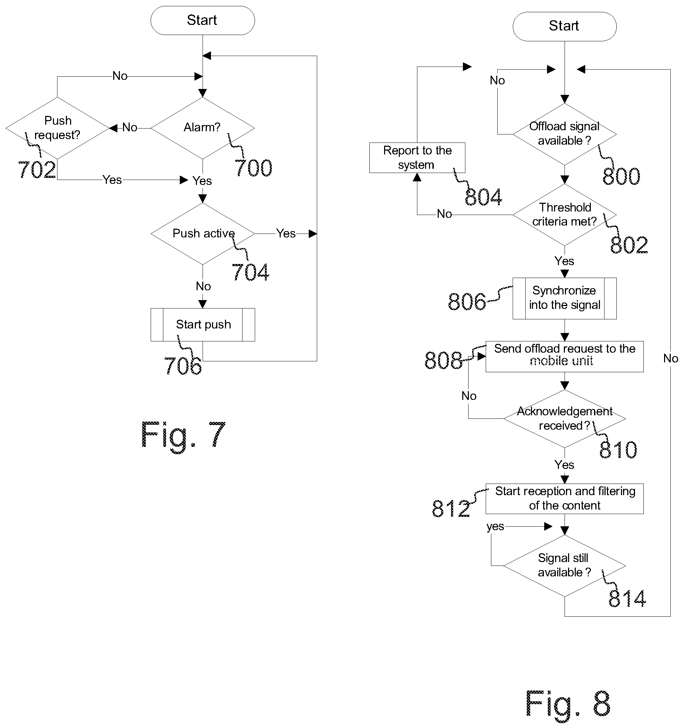

According to an embodiment, the mobile communication unit is arranged to start the transmission to the wayside communication unit in response to a control signal obtained via the mobile communication unit. Figure 7 shows a flow chart of a procedure for initiating the transmission from the mobile communication unit according to such an embodiment. In this procedure, the transmission is initiated from the vehicle, for example as a response to a predetermined alarm signal. The transmission may be initiated automatically or manually, e.g. by the personnel of the vehicle. In the beginning, the mobile communication unit remains in a monitoring state, thereby continuously or periodically monitoring whether a predetermined alarm signal is detected (700), and if not, whether a push request for initiating the transmission is provided (702) otherwise. The alarm signal may be generated automatically, for example as a response to the available memory capacity of the NVR or the data storage reaching a minimum threshold, or it may be generated manually, for example if the personnel detect an emergency situation. Even if no alarm signal is detected, a push request may still be generated, either automatically, for example if the vehicle is approaching a wayside unit or is situated in a predetermined location, or manually by the personnel or passengers through emergency phone, for example if no automatic initiation is available. Also, a number of different Video Content Analysis (VCA)/Video Image Analysis (VIA) applications within the video management system may trigger behaviour or other events which are configured to trigger alarm for push request. Furthermore, different audio sensors may trigger alarm for push request, e.g. upon a gunshot is detected.

As a response to the detection of either the alarm signal (700) or the push request (702), it is checked whether the push is already active (704), and if not, the push is started (706). The push may involve transmitting the whole content, or at least a part of the content, of the NVR and/or the data storage to a wayside unit. After completing the push, the mobile communication unit returns to the monitoring state. On the other hand, the initiated push may continue as a non-stop transmission of the continuously generated user data and/or live video/audio feed from the cameras.

According to an embodiment, the wayside communication unit is arranged to monitor whether a transmission signal from the mobile communication unit is available, and if affirmative, the wayside communication unit is arranged to start the reception by synchronising into the transmission signal.

According to a further embodiment, in response to detecting that the transmission signal from the mobile communication unit is available, the wayside communication unit is arranged to send an offload request to the mobile communication unit, and in response to receiving an acknowledgement from the mobile communication unit, the wayside communication unit is arranged to start the reception by synchronising into the transmission signal.

Figure 8 shows a flow chart of a procedure for initiating the transmission from the mobile communication unit according to such an embodiment. In this procedure, the transmission is initiated from the wayside unit, for example when the vehicle is approaching the wayside unit. In the beginning, the wayside unit monitors continuously or periodically whether an offload signal transmitted by the mobile communication unit on a predetermined frequency range is detected (800). It is then checked if the detected offload signal meets a threshold criteria (802); i.e. if the quality of the signal, for example in terms of bit error rate and/or available bandwidth, is sufficient for starting the transmission of user data and/or video/audio feed from the cameras. If the threshold criteria are not met, for example due to the reason that the mobile communication unit is locating too far from the wayside unit or that there is a malfunction in the transmission or the reception of the offload signal, an indication is sent (804) to a control unit of the transmission system, which may automatically or manually try to solve the reason why the threshold criteria are not met, and possibly take corrective measures.

If the offload signal meets the threshold criteria, the wayside system synchronizes into the signal (806). The offload signal may comprise, for example, packets of a private data type of MPEG-2 TS format inserted as synchronization packets between media stream packets at desired segmentation intervals for facilitating the synchronization. Then the wayside unit sends an offload request (808) to the mobile communication unit and ensures that an acknowledgement for starting the transmission is received (810) from the mobile communication unit.

Once the mobile communication unit starts the transmission of the user data and/or video/audio feed from the cameras, the wayside unit starts the reception (812) and filters the content of the streams appropriately. The wayside unit may not necessarily know the amount of data to be received or the length of the transmission, and therefore the wayside unit may periodically check whether the transmission signal is still available (814).

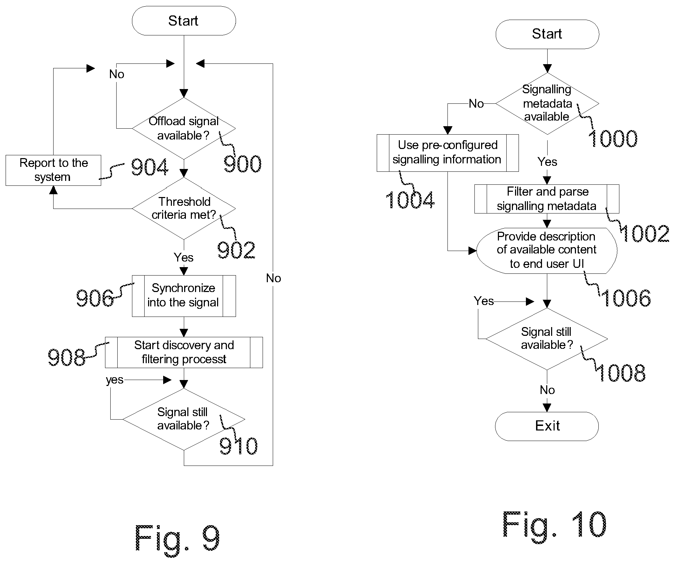

In the embodiment described in Figure 8, the wayside unit actively sends a request to the mobile communication unit for starting the transmission. According to an embodiment, the mobile communication unit may initiate the transmission independently, and the wayside unit may then synchronize into the signal when it detects the signal to be available. The transmission may be initiated from the mobile communication unit, for example when it is concluded on the basis of location information that the vehicle is approaching the wayside unit. This embodiment is depicted in Figure 9.

The stages 900 - 906 are similar to those of 800 - 806 in Figure 8: the wayside unit monitors whether an offload signal transmitted by the mobile communication unit is detected (900), and checks if the detected offload signal meets a threshold criteria (902). If not, an indication is sent (904) the control unit of the transmission system for possible corrective measures, and when the offload signal meets the threshold criteria, the wayside system synchronizes into the signal (906).

However, no offload request is sent to the mobile communication unit, but the mobile communication unit initiates the transmission independently and the wayside unit starts the reception (908), discovers the program streams and filters the content of the streams appropriately. Again, the wayside unit may periodically check whether the transmission signal is still available (910).

Figure 10 shows a flow chart of a procedure for discovering a camera-specific feed from the broadcast transmission comprising multiplexed transport streams. As shown in Figure 4, the discovery is preferably carried out in the wayside communication unit, but it may be possible to transfer the broadcast transmission to the surveillance centre where the camera-specific feed is identified and extracted from the rest of the data.

If carried out in the wayside communication unit, the wayside communication unit checks (1000) whether the received transport streams comprise metadata identifying one or more camera-specific feeds. If such metadata is found, for example in the PSI/SI tables of the transport stream, the metadata is parsed (1002) from the transport stream. However, if no metadata identifying one or more camera-specific feeds is found from the received transport streams, the wayside communication unit may use (1004) a default configuration setting for the camera-specific feeds. For example, it may be configured that the elementary streams ES1-ES3 supposedly originate from camera X locating in car Y, the elementary streams ES4-ES6 supposedly originate from camera X+1 locating in car Y, etc. When the camera feeds are shown on a display or a video wall of the surveillance centre, the feeds are provided (1006) with a description of the available content, where the description is obtained either from the metadata or the used default configuration. The description may be shown together with the camera feed on the display or the video wall. As before, the wayside communication unit may periodically check whether the transmission signal is still available (1008).

The above examples have been described as using DVB-T or ATSC as the broadcast standard. According to an embodiment, any other broadcast/wireless standard/technology can be used for the communication between the mobile communication unit and the wayside communication unit, such as CMMB (China Mobile Multimedia Broadcasting), DVB-SH (Satellite services to Handhelds), DVB-H (Handhelds), DVB-T2, ISDB-T (Integrated Services Digital Broadcasting - Terrestrial), DAB (Digital Audio Broadcasting), T-DMB (Digital Multimedia Broadcasting - Terrestrial), or WIMAX (Worldwide Interoperability for Microwave Access). In addition, any other wireless standard or proprietary technology can be used for the communication between the wayside communication unit and mobile communication unit, including fully IP based systems and standards.

Moreover, in the above examples the mobile communication unit has been described as being connected to a public transportation vehicle. However, the embodiments are not limited to vehicles, but at least some of the embodiments are applicable, for example, to any portable or handheld communication devices, such mobile phones, smart phones, tablets or laptop computers.

A skilled man appreciates that any of the embodiments described above may be implemented as a combination with one or more of the other embodiments, unless there is explicitly or implicitly stated that certain embodiments are only alternatives to each other.

With the arrangement described above, the capacity problems of prior art systems are resolved by defining a broadcast-based offload process, which allows more capacity to the system and hence makes the offload process faster. Moreover, the broadcast system can be used to broadcast online video/audio content also in the areas where Wi-Fi or 3G/4G connections are not available or the resources of such networks are overloaded. Hence broadcast live audio/video broadcast allows also inspection of video/audio feed online from the mobile vehicles.

It will be obvious for a person skilled in the art that with technological developments, the basic idea of the invention can be implemented in a variety of ways. Thus, the invention and its embodiments are not limited to the above-described examples but they may vary within the scope of the claims.

## Claims

1. A system for transferring video surveillance data between a mobile communication unit of a public transportation vehicle and a wayside communication unit;
the mobile communication unit being arranged to obtain video surveillance data from one or more video surveillance cameras arranged in functional connection with the mobile communication unit, the mobile communication unit comprising
- a video recorder arranged to buffer at least a part of the video surveillance data from said one or more video surveillance cameras before transmission to the wayside communication unit;
- at least one encoder arranged to encode said video surveillance data into a stream format compatible with a wireless standard, and
- a transmitter arranged to transmit the encoded video surveillance data stream in accordance with said wireless standard to the wayside communication unit; and
the wayside communication unit comprising a receiver arranged to receive the encoded video surveillance data stream in accordance with said wireless standard, **characterized in that** the wayside communication unit is arranged to monitor whether a transmission signal from the mobile communication unit is available;
check that the quality of the transmission signal is sufficient for transmitting the encoded video surveillance data stream and if affirmative
send an offload request to the mobile communication unit; and
in response to receiving an acknowledgement from the mobile communication unit, the wayside communication unit is arranged to
start the reception of the encoded video surveillance data stream by synchronising into the transmission signal; and
forward the encoded video surveillance data stream to a data target for decoding.

2. The system according to claim 1, wherein
the mobile communication unit is arranged to obtain user data from one or more data terminals operated by passengers of the mobile vehicle.

3. The system according to claim 1 or 2, wherein
the public transportation vehicle, such as a train, a tram, a metro train or a bus, is arranged to travel a predetermined route, and the system comprises a plurality of wayside communication units arranged along said route.

4. The system according to claim 1 or 2, wherein
the wayside communication unit is arranged to forward the video data from said one or more surveillance cameras to a video surveillance system and user data from said one or more data terminals operated by the passengers to a data communication network.

5. The system according to any preceding claim, wherein
the mobile communication unit is arranged to start the transmission to the wayside communication unit in response to a control signal obtained via the mobile communication unit.

6. A method for transferring video surveillance data between a mobile communication unit of a public transportation unit and a wayside communication unit, the method comprising
obtaining video surveillance data from one or more video surveillance cameras arranged in functional connection with the mobile communication unit;
buffering at least a part of the video surveillance data from said one or more video surveillance cameras before transmission to the wayside communication unit;
encoding said data into a stream format compatible with a wireless standard; **characterized in that** the method further comprises monitoring, by the wayside unit, whether a transmission signal from the mobile communication unit is available;
checking that the quality of the transmission signal is sufficient for transmitting the encoded video surveillance data stream and if affirmative, sending an offload request to the mobile communication unit; and
in response to receiving an acknowledgement from the mobile communication unit, starting, by the wayside unit, the reception of the encoded video surveillance data stream by synchronising into the transmission signal; and
transmitting the encoded video surveillance data stream in accordance with said wireless standard to the wayside communication unit for further forwarding the encoded video surveillance data stream to a data target for decoding.

7. The method according to claim 6, wherein
obtaining, by the mobile communication unit, user data from one or more data terminals operated by passengers of the mobile vehicle.

8. The method according to claim 6, wherein
the public transportation vehicle, such as a train, a tram, a metro train or a bus, is arranged to travel a predetermined route, and where a plurality of wayside communication units are arranged along said route.

9. The method according to claim 6 or 7, the method further comprising
forwarding the video data from said one or more surveillance cameras to a video surveillance system and user data from said one or more data terminals operated by the passengers to a data communication network.

10. The method according to any of claims 6 - 9, the method further comprising
starting the transmission from the mobile communication unit to the wayside communication unit in response to a control signal obtained via the mobile communication unit.

11. A mobile communication unit of a public transportation vehicle arranged to obtain video surveillance data from one or more video surveillance cameras arranged in functional connection with the mobile communication unit, the mobile communication unit comprising
a video recorder arranged to buffer at least a part of the video data from said one or more video surveillance cameras before transmission to the wayside communication unit;
at least one encoder arranged to encode said video surveillance data into a stream format compatible with a wireless standard; and
a transmitter arranged to transmit the encoded video surveillance data stream in accordance with said wireless standard to the wayside communication unit for further forwarding the encoded data stream to a data target for decoding, **characterized in that** the mobile communication unit is arranged to
receive an offload request from the wayside communication unit in response to checking that the quality of a transmission signal is sufficient for transmitting the encoded video surveillance data stream;
send an acknowledgement to the offload request to the wayside communication unit; and
start the transmission to the wayside communication unit in response to a control signal obtained via the mobile communication unit.

12. The mobile communication unit according to claim 11, wherein
the mobile communication unit is arranged to obtain user data from one or more data terminals operated by passengers of the public transportation vehicle.

13. The mobile communication unit according to claim 11 or 12, wherein
the public transportation vehicle, such as a train, a tram, a metro train or a bus, is arranged to travel a predetermined route, and the system comprises a plurality of wayside communication units arranged along said route.

14. A wayside communication unit comprising
a receiver arranged to receive an encoded video surveillance data stream in accordance with a wireless standard from a mobile communication unit of public transportation vehicle, the data being obtained from one or more video surveillance cameras arranged in functional connection with the mobile communication unit; **characterized in that** the wayside communication unit is arranged to monitor whether a transmission signal from the mobile communication unit is available;
check that the quality of the transmission signal is sufficient for transmitting the encoded video surveillance data stream and if affirmative
send an offload request to the mobile communication unit; and
in response to receiving an acknowledgement from the mobile communication unit, the wayside communication unit is arranged to
start the reception of the encoded video surveillance data stream by synchronising into the transmission signal; and
forward the encoded video surveillance data stream to a data target for decoding.

15. The wayside communication unit according to claim 14, wherein
the wayside communication unit is arranged along a route of the public transportation vehicles comprising said mobile communication unit, said wayside communication unit being arranged to receive user data from one or more data terminals operated by passengers of the mobile vehicle provided by mobile communication unit.

## Patentansprüche

1. Ein System zur Übertragung von Videoüberwachungsdaten zwischen einer mobilen Kommunikationseinheit eines öffentlichen Transportfahrzeugs und einer streckenseitigen Kommunikationseinheit;
wobei die mobile Kommunikationseinheit angeordnet ist, um Videoüberwachungsdaten von einer oder mehreren Videoüberwachungskameras zu erhalten, die in funktionaler Verbindung mit der mobilen Kommunikationseinheit angeordnet sind, wobei die mobile Kommunikationseinheit Folgendes aufweist:
- einen Videorecorder, der angeordnet ist, um mindestens einen Teil der Videoüberwachungsdaten von der einen oder den mehreren Videoüberwachungskameras vor Übertragung an die streckenseitige Kommunikationseinheit zwischenzuspeichern;
- mindestens eine Codiereinrichtung, die angeordnet ist, um die Videoüberwachungsdaten in ein Datenstromformat zu verschlüsseln, das mit einem drahtlosen Standard kompatibel ist, und
- einen Sender, der angeordnet ist, um den verschlüsselten Videoüberwachungsdatenstrom gemäß dem drahtlosen Standard an die streckenseitige Kommunikationseinheit zu übertragen; und
die streckenseitige Kommunikationseinheit einen Empfänger aufweist, der so angeordnet ist, dass er den verschlüsselten Videoüberwachungsdatenstrom gemäß dem drahtlosen Standard empfängt, **dadurch gekennzeichnet, dass** die streckenseitige Kommunikationseinheit angeordnet ist, um
zu überwachen, ob ein Übertragungssignal von der mobilen Kommunikationseinheit verfügbar ist;
zu überprüfen, ob die Qualität des Übertragungssignals zum Übertragen des verschlüsselten Videoüberwachungsdatenstroms ausreichend ist, und wenn ja,
eine Offload-Anforderung an die mobile Kommunikationseinheit zu senden; und
in Antwort auf den Empfang einer Rückmeldung von der mobilen Kommunikationseinheit, die streckenseitige Kommunikationseinheit angeordnet ist, um
den Empfang des verschlüsselten Videoüberwachungsdatenstroms durch Synchronisation in das Sendesignal zu starten; und
den verschlüsselten Videoüberwachungsdatenstrom an ein Datenziel zur Dekodierung weiterzuleiten.

2. System gemäß Anspruch 1, wobei
die mobile Kommunikationseinheit angeordnet ist, um Benutzerdaten von einem oder mehreren Datenendgeräten, die von Fahrgästen des mobilen Fahrzeugs bedient werden, zu erhalten.

3. System gemäß Anspruch 1 oder 2, wobei
das öffentliche Transportfahrzeug, wie z. B. ein Zug, eine Straßenbahn, eine U-Bahn oder ein Bus angeordnet ist, um eine vorbestimmte Wegstrecke zu fahren, und das System eine Vielzahl von an der Wegstrecke angeordneten streckenseitigen Kommunikationseinheiten aufweist.

4. System gemäß Anspruch 1 oder 2, wobei
die streckenseitige Kommunikationseinheit angeordnet ist, um die Videodaten aus einer oder mehreren Überwachungskameras an ein Videoüberwachungssystem und Benutzerdaten aus einem oder mehreren von den Fahrgästen bedienten Datenendgeräten an ein Datenkommunikationsnetzwerk weiterzuleiten.

5. System gemäß einem vorhergehenden Anspruch, wobei
die mobile Kommunikationseinheit angeordnet ist, um die Übertragung an die streckenseitige Kommunikationseinheit in Antwort auf ein durch die mobile Kommunikationseinheit erhaltenes Steuersignal zu starten.

6. Ein Verfahren zum Übertragen von Videoüberwachungsdaten zwischen einer mobilen Kommunikationseinheit einer öffentlichen Transporteinheit und einer streckenseitigen Kommunikationseinheit, wobei das Verfahren Folgendes umfasst:
Erhalten von Videoüberwachungsdaten aus einer oder mehreren Videoüberwachungskameras, die in funktionaler Verbindung mit der mobilen Kommunikationseinheit angeordnet sind;
Zwischenspeichern von mindestens einem Teil der Videoüberwachungsdaten aus einer oder mehreren Videoüberwachungskameras vor Übertragung an die streckenseitige Kommunikationseinheit;
Verschlüsseln der Daten in ein Datenstromformat, das mit einem drahtlosen Standard kompatibel ist;
**dadurch gekennzeichnet, dass** das Verfahren darüber hinaus Folgendes umfasst:
Überwachen, durch die streckenseitige Einheit, ob ein Übertragungssignal aus der mobilen Kommunikationseinheit vorhanden ist;
Überprüfen, ob die Qualität des Übertragungssignals zum Übertragen des verschlüsselten Videoüberwachungsdatenstroms ausreichend ist, und wenn ja, Senden einer Offload-Anforderung an die mobile Kommunikationseinheit; und
in Antwort auf den Empfang einer Rückmeldung von der mobilen Kommunikationseinheit, Starten, durch die streckenseitige Einheit, des Empfangs des verschlüsselten Videoüberwachungsdatenstroms durch Synchronisation in das Sendesignal; und
Übertragen des verschlüsselten Videoüberwachungsdatenstroms in Übereinstimmung mit dem drahtlosen Standard an die streckenseitige Kommunikationseinheit zum weiteren Weiterleiten des verschlüsselten Videoüberwachungsdatenstroms an ein Datenziel zum Entschlüsseln.

7. Verfahren gemäß Anspruch 6, wobei
Erhalten, durch die mobile Kommunikationseinheit, von Benutzerdaten aus einem oder mehreren Datenendgeräten, die von Fahrgästen des mobilen Fahrzeugs bedient werden.

8. Verfahren gemäß Anspruch 6, wobei
das öffentliche Transportfahrzeug, wie zum Beispiel ein Zug, eine Straßenbahn, eine U-Bahn oder eine Bus angeordnet ist, um eine vorbestimmte Wegstrecke zu fahren, und wobei eine Vielzahl von streckenseitigen Kommunikationseinheiten entlang der Wegstrecke angeordnet ist.

9. Verfahren gemäß Anspruch 6 oder 7, wobei das Verfahren darüber hinaus Folgendes umfasst:
Weiterleiten der Videodaten von einer oder mehreren Überwachungskameras an ein Videoüberwachungssystem und von Benutzerdaten aus einem oder mehreren von den Fahrgästen bedienten Datenendgeräten an ein Datenkommunikationsnetzwerk.

10. Verfahren gemäß einem der Ansprüche 6 - 9, wobei das Verfahren darüber hinaus Folgendes umfasst:
Starten der Übertragung von der mobilen Kommunikationseinheit an die streckenseitige Kommunikationseinheit in Antwort auf ein durch die mobile Kommunikationseinheit erhaltenes Steuersignal.

11. Eine mobile Kommunikationseinheit eines öffentlichen Transportfahrzeugs, das angeordnet ist, um Videoüberwachungsdaten von einer oder mehrerer Videoüberwachungskameras zu erhalten, die in funktionaler Verbindung mit der mobile Kommunikationseinheit angeordnet sind, wobei die mobile Kommunikationseinheit Folgendes aufweist:
einen Videorekorder, der angeordnet ist, um mindestens einen Teil der Videodaten von der einen oder den mehreren Videoüberwachungskameras vor Übertragung an die streckenseitige Kommunikationseinheit zwischenzuspeichern;
- mindestens eine Codiereinrichtung, die angeordnet ist, um die Videoüberwachungsdaten in ein Datenstromformat zu verschlüsseln, das mit einem drahtlosen Standard kompatibel ist, und
- einen Sender, der angeordnet ist, um den verschlüsselten Videoüberwachungsdatenstrom in Übereinstimmung mit dem drahtlosen Standard an die streckenseitige Kommunikationseinheit zur weiteren Weiterleitung des verschlüsselten Datenstroms an ein Datenziel zum Entschlüsseln zu übertragen, **dadurch gekennzeichnet, dass** die mobile Kommunikationseinheit angeordnet ist, um
eine Offload-Anforderung von der streckenseitigen Kommunikationseinheit zu empfangen, in Antwort auf das Überprüfen, ob die Qualität eines Übertragungssignals ausreichend zum Übertragen des verschlüsselten Videoüberwachungsdatenstroms ist;
eine Rückmeldung auf die Offload-Anforderung an die streckenseitige Kommunikationseinheit zu senden; und
die Übertragung an die streckenseitige Kommunikationseinheit in Antwort auf ein durch die mobile Kommunikationseinheit erhaltenes Steuersignal zu starten.

12. Mobile Kommunikationseinheit gemäß Anspruch 11, wobei
die mobile Kommunikationseinheit angeordnet ist, um Benutzerdaten aus einem oder mehreren von Fahrgästen des öffentlichen Transportfahrzeugs bedienten Datenendgeräten zu erhalten.

13. Mobile Kommunikationseinheit gemäß Anspruch 11 oder 12, wobei
das öffentliche Transportfahrzeug, wie zum Beispiel ein Zug, eine Straßenbahn, eine U-Bahn oder ein Bus angeordnet ist, um eine vorbestimmte Wegstrecke zu fahren, und das System eine Vielzahl von an der Wegstrecke angeordneten streckenseitigen Kommunikationseinheiten aufweist.

14. Eine streckenseitige Kommunikationseinheit, die Folgendes aufweist:
einen Empfänger, der angeordnet ist, um einen verschlüsselten Videoüberwachungsdatenstrom in Übereinstimmung mit einem drahtlosen Standard von einer mobilen Kommunikationseinheit eines öffentlichen Transportfahrzeugs zu empfangen, wobei die Daten von einer oder mehreren Videoüberwachungskameras erhalten werden, die in funktionaler Verbindung mit der mobilen Kommunikationseinheit angeordnet sind, **dadurch gekennzeichnet, dass** die streckenseitige Kommunikationseinheit angeordnet ist, um
zu überwachen, ob ein Übertragungssignal von der mobilen Kommunikationseinheit vorhanden ist;
zu überprüfen, ob die Qualität des Übertragungssignals zum Übertragen des verschlüsselten Videoüberwachungsdatenstroms ausreichend ist, und wenn ja,
eine Offload-Anforderung an die mobile Kommunikationseinheit zu senden;und
in Antwort auf den Empfang einer Rückmeldung von der mobilen Kommunikationseinheit die streckenseitige Kommunikationseinheit angeordnet ist, um
den Empfang des verschlüsselten Videoüberwachungsdatenstroms durch Synchronisation in das Sendesignal zu starten; und
den verschlüsselten Videoüberwachungsdatenstrom an ein Datenziel zur Dekodierung weiterzuleiten.

15. Streckenseitige Kommunikationseinheit gemäß Anspruch 14, wobei
die streckenseitige Kommunikationseinheit entlang einer Wegstrecke der öffentlichen Transportfahrzeuge angeordnet ist, welche die mobile Kommunikationseinheit aufweist, wobei die streckenseitige Kommunikationseinheit angeordnet ist, um Benutzerdaten aus einem oder mehreren Datenendgeräten zu empfangen, die von Fahrgästen des mobilen Fahrzeugs bedient werden, die von der mobilen Kommunikationseinheit bereitgestellt werden.

## Revendications

1. Un système de transfert de données de surveillance vidéo entre une unité de communication mobile d'un véhicule de transport public et une unité de communication de bordure de voie,
l'unité de communication mobile étant agencée de façon à obtenir des données de surveillance vidéo à partir d'une ou de plusieurs caméras de surveillance vidéo agencées en connexion fonctionnelle avec l'unité de communication mobile, l'unité de communication mobile comprenant
- un enregistreur vidéo agencé de façon à conserver en mémoire tampon au moins une partie des données de surveillance vidéo à partir desdites une ou plusieurs caméras de surveillance vidéo avant la transmission à l'unité de communication de bordure de voie,
- au moins un codeur agencé de façon à coder lesdites données de surveillance vidéo en un format de flux compatible avec une norme sans fil, et
- un émetteur agencé de façon à transmettre le flux de données de surveillance vidéo codées conformément à ladite norme sans fil à l'unité de communication de bordure de voie, et
l'unité de communication de bordure de voie comprenant un récepteur agencé de façon à recevoir le flux de données de surveillance vidéo codées conformément à ladite norme sans fil, **caractérisé en ce que** l'unité de communication de bordure de voie est agencée de façon à
surveiller si un signal de transmission provenant de l'unité de communication mobile est disponible,
vérifier que la qualité du signal de transmission est suffisante pour la transmission du flux de données de surveillance vidéo codées et, dans l'affirmative,
envoyer une demande de délestage à l'unité de communication mobile, et
en réponse à la réception d'un accusé de réception à partir de l'unité de communication mobile, l'unité de communication de bordure de voie est agencée de façon à
démarrer la réception du flux de données de surveillance vidéo codées par une synchronisation avec le signal de transmission, et
transférer le flux de données de surveillance vidéo codées vers une cible de données à des fins de décodage.

2. Le système selon la revendication 1, dans lequel
l'unité de communication mobile est agencée de façon à obtenir des données d'utilisateur à partir d'un ou de plusieurs terminaux de données actionnés par des passagers du véhicule mobile.

3. Le système selon la revendication 1 ou 2, dans lequel
le véhicule de transport public, tel que train, tramway, rame de métro ou bus, est agencé de façon à circuler selon un itinéraire prédéterminé, et le système comprend une pluralité d'unités de communication de bordure de voie agencées le long dudit itinéraire.

4. Le système selon la revendication 1 ou 2, dans lequel
l'unité de communication de bordure de voie est agencée de façon à transférer les données vidéo desdites une ou plusieurs caméras de surveillance vers un système de surveillance vidéo et des données d'utilisateur desdits un ou plusieurs terminaux de données actionnés par les passagers vers un réseau de communication de données.

5. Le système selon l'une quelconque des revendications précédentes, dans lequel
l'unité de communication mobile est agencée de façon à démarrer la transmission vers l'unité de communication de bordure de voie en réponse à un signal de commande obtenu par l'intermédiaire de l'unité de communication mobile.

6. Un procédé destiné au transfert de données de surveillance vidéo entre une unité de communication mobile d'une unité de transport public et une unité de communication de bordure de voie, le procédé comprenant
l'obtention de données de surveillance vidéo à partir d'une ou de plusieurs caméras de surveillance vidéo agencées en connexion fonctionnelle avec l'unité de communication mobile,
la conservation en mémoire tampon d'au moins une partie des données de surveillance vidéo provenant desdites une ou plusieurs caméras de surveillance vidéo avant la transmission à l'unité de communication de bordure de voie,
le codage desdites données en un format de flux compatible avec une norme sans fil,
**caractérisé en ce que** le procédé comprend en outre
la surveillance, par l'unité de bordure de voie, si un signal de transmission provenant de l'unité de communication mobile est disponible,
la vérification que la qualité du signal de transmission est suffisante pour la transmission du flux de données de surveillance vidéo codées et, dans l'affirmative, l'envoi d'une demande de délestage à l'unité de communication mobile, et
en réponse à la réception d'un accusé de réception à partir de l'unité de communication mobile, le démarrage, par l'unité de bordure de voie, de la réception du flux de données de surveillance vidéo codées par une synchronisation avec le signal de transmission, et
la transmission du flux de données de surveillance vidéo codées conformément à ladite norme sans fil vers l'unité de communication de bordure de voie pour un transfert complémentaire du flux de données de surveillance vidéo codées vers une cible de données à des fins de décodage.

7. Le procédé selon la revendication 6, comprenant
l'obtention, par l'unité de communication mobile, de données d'utilisateur à partir d'un ou de plusieurs terminaux de données actionnés par des passagers du véhicule mobile.

8. Le procédé selon la revendication 6, dans lequel
le véhicule de transport public, tel que train, tram, rame de métro ou bus, est agencé de façon à circuler selon un itinéraire prédéterminé, et dans lequel une pluralité d'unités de communication de bordure de voie sont agencées le long dudit itinéraire.

9. Le procédé selon la revendication 6 ou 7, le procédé comprenant en outre
le transfert des données vidéo desdites une ou plusieurs caméras de surveillance vers un système de surveillance vidéo et de données d'utilisateur provenant desdits un ou plusieurs terminaux de données actionnés par les passagers vers un réseau de communication de données.

10. Le procédé selon l'une quelconque des revendications 6 à 9, le procédé comprenant en outre
le démarrage de la transmission de l'unité de communication mobile vers l'unité de communication de bordure de voie en réponse à un signal de commande obtenu par l'intermédiaire de l'unité de communication mobile.

11. Une unité de communication mobile d'un véhicule de transport public agencé de façon à obtenir des données de surveillance vidéo à partir d'une ou de plusieurs caméras de surveillance vidéo agencées en connexion fonctionnelle avec l'unité de communication mobile, l'unité de communication mobile comprenant
un enregistreur vidéo agencé de façon à conserver en mémoire tampon au moins une partie des données vidéo provenant desdites une ou plusieurs caméras de surveillance vidéo avant la transmission à l'unité de communication de bordure de voie,
au moins un codeur agencé de façon à coder lesdites données de surveillance vidéo en un format de flux compatible avec une norme sans fil, et
un émetteur agencé de façon à transmettre le flux de données de surveillance vidéo codées conformément à ladite norme sans fil à l'unité de communication de bordure de voie pour un transfert complémentaire du flux de données codées vers une cible de données à des fins de décodage, **caractérisé en ce que** l'unité de communication mobile est agencé de façon à
recevoir une demande de délestage à partir de l'unité de communication de bordure de voie en réponse à la vérification que la qualité d'un signal de transmission est suffisante pour la transmission du flux de données de surveillance vidéo codées,
envoyer un accusé de réception à la demande de délestage à l'unité de communication de bordure de voie, et
démarrer la transmission vers l'unité de communication de bordure de voie en réponse à un signal de commande obtenu par l'intermédiaire de l'unité de communication mobile.

12. L'unité de communication mobile selon la revendication 11, dans laquelle
l'unité de communication mobile est agencée de façon à obtenir des données d'utilisateur à partir d'un ou de plusieurs terminaux de données actionnés par des passagers du véhicule de transport public.

13. L'unité de communication mobile selon la revendication 11 ou 12, dans laquelle
le véhicule de transport public, tel que train, tram, rame de métro ou bus, est agencé de façon à circuler selon un itinéraire prédéterminé, et le système comprend une pluralité d'unités de communication de bordure de voie agencées le long dudit itinéraire.

14. Une unité de communication de bordure de voie comprenant
un récepteur agencé de façon à recevoir un flux de données de surveillance vidéo codées conformément à une norme sans fil à partir d'une unité de communication mobile d'un véhicule de transport public, les données étant obtenues à partir d'une ou de plusieurs caméras de surveillance vidéo agencées en connexion fonctionnelle avec l'unité de communication mobile, **caractérisé en ce que** l'unité de communication de bordure de voie est agencée de façon à surveiller si un signal de transmission provenant de l'unité de communication mobile est disponible,
vérifier que la qualité du signal de transmission est suffisante pour la transmission du flux de données de surveillance vidéo codées et, dans l'affirmative,
envoyer une demande de délestage à l'unité de communication mobile, et
en réponse à la réception d'un accusé de réception à partir de l'unité de communication mobile, l'unité de communication de bordure de voie est agencée de façon à
démarrer la réception du flux de données de surveillance vidéo codées par une synchronisation avec le signal de transmission, et
transférer le flux de données de surveillance vidéo codées vers une cible de données à des fins de décodage.

15. L'unité de communication de bordure de voie selon la revendication 14, dans laquelle
l'unité de communication de bordure de voie est agencée le long d'un itinéraire des véhicules de transport public comprenant ladite unité de communication mobile, ladite unité de communication de bordure de voie étant agencée de façon à recevoir des données d'utilisateur à partir d'un ou de plusieurs terminaux de données actionnés par des passagers du véhicule mobile équipé d'une unité de communication mobile.
